# EUROPEAN PATENT APPLICATION

(11) **EP 2 305 363 A1**
(43) Date of publication of application: **06.04.2011**
(21) Application number: 09171635.7
(22) Date of filing: 29.09.2009
(51) Int. Cl.: B01D 53/14, B01D 53/62

(54) **Power plant for CO2 capture**

(71) Applicant: Alstom Technology Ltd, 5400 Baden (CH)
(72) Inventor: Li, Hongtao, 5300 Turgi (CH); Nagel, Holger Gerhard, 70188 Stuttgart (DE); Mahieux, Celine, 5400 Baden (CH); Droux, François, 5452 Oberrohrdorf (CH)

(57) **Abstract**

Since CO2 is identified as a main greenhouse gas, its capture and storage is essential to control global warming. Competitiveness of power plants designed for CO2 capture and compression, retrofit ready power plants and efficient ways to retrofit conventional power plants to CO2 capture plants will allow earlier utilization of CO2 capture systems (12).

The objective of the present invention is to provide a fossil fired power plant with minimum impact of the CO2 capture system (12) on the conventional part of the plant as well as a method to operate such a plant. Further, a power plant, which is ready for the retrofit of a CO2 capture plant and a method of retrofitting an existing plant into a power plant with CO2 capture as well as a method to operate this kind of plant are the object of the invention.

One main aspect of the invention is to add a power plant part, which is capable of providing the steam and power required to operate CO2 capture system (12), and to provide a CO2 capture system (12), which has the capacity to remove CO2 from the flue gas flows of the conventional, and of the additional power plant part.

## Description

### FIELD OF THE INVENTION

The invention relates to power plants with integrated CO2 capture as well as CO2 capture ready power plants.

### BACKGROUND OF THE INVENTION

In recent years it has become obvious that generation of greenhouse gases lead to global warming and that further increase in greenhouse gas production will further accelerate global warming. Since CO2 (carbon dioxide) is identified as a main greenhouse gas, carbon capture and storage is considered one potential major means to reduce the release of greenhouse gases into the atmosphere and to control global warming. In this context CCS is defined as the process of CO2 capture, compression, transport and storage. Capture is defined as a process in which CO2 is removed either from the flue gases after combustion of a carbon based fuel or the removal of and processing of carbon before combustion. Regeneration of any absorbents, adsorbents or other means to remove CO2 of carbon from a flue gas or fuel gas flow is considered to be part of the capture process.

The CO2 capture technology currently considered closest to large-scale industrial application is post combustion capture. In post-combustion capture the CO2 is removed from a flue gas. The remaining flue gas is released to the atmosphere and the CO2 is compressed for transportation and storage. There are several technologies known to remove CO2 from a flue gas such as absorption, adsorption, membrane separation, and cryogenic separation.

All known technologies for CO2 capture and compression require relatively large amounts of energy. There are many publications on the optimization of the different processes and the reduction of the power and efficiency penalty by integrating these processes into a power plant

The EP1688173 gives an example for post combustion capture and a method for the reduction of power output penalties due to CO2 absorption, respectively the regeneration of the absorption liquid. Here it is proposed to extract steam for regeneration of the absorbent from different stages of the steam turbine of a power plant to minimize the reduction in the turbine output.

In the same context, the W02007/073201 suggests to use the compression heat, which results from compressing the CO2 flow for regeneration of the absorbent.

Further, the use of cryogenic CO2 separation using a swirl nozzle and efforts to optimize this method's integration into a power plant process have described, as for example in the US2009/0173073.

These methods aim to reduce the power requirements of specific CO2 capture equipments, however they increase the complexity of the plant and plant operation. Further, the complex integrated solutions render it difficult to retrofit CO2 capture equipment into an existing power plant or power plant concept.

### SUMMARY OF THE INVENTION

The main objective of the present invention is to provide a fossil fired power plant with minimum impact of the CO2 capture system (also called CO2 capture plant) on the conventional part of the plant as well as a method to operate such a plant. Further, a power plant, which is ready for the retrofit of a CO2 capture plant and a method to retrofit an existing plant into a power plant with CO2 capture as well as a method to operate this kind of plant are the object of the invention.

To this end, a plant comprising at least two parts is proposed: a plant comprising at least one conventional part, which is basically designed like a conventional power plant without CO2 capture, at least one additional fossil fired power plant part, plus at least one CO2 capture system designed to capture CO2 from the flue gases of the conventional plant part and of the additional CO2 power plant part. The conventional part of the power plant is simply called conventional power part. The additional power plant part is called CO2 power part.

One main aspect of the invention is to provide a CO2 power part, which is capable of providing the steam and power required to operate CO2 capture system, and to provide a CO2 capture system, which is designed to remove CO2 from the flue gas flows of the conventional, and of the CO2 power part. Due to the capability of the CO2 power part to drive the overall CO2 capture system the conventional plant can be optimized disregarding the requirements of the CO2 capture system. In particular no steam extraction is required from the steam turbine or any other part of the steam cycle of the conventional power part. Further, the mechanical, electrical, and control interfaces between the conventional power part and the CO2 power part can be kept at a minimum. Ideally the mechanical interface is limited to the flue gas ducts. The control interface can in theory be limited to a simple load signal.

Depending on the grid requirements and permits, the CO2 power part is designed to match the CO2 capture system's power requirements or can be sized larger in order to increase the total plants net output compared to that of the conventional part itself.

The CO2 power part itself can be optimized for a process, in which a large portion or all of the steam is extracted for the CO2 capture system.

The separation of conventional part and CO2 power part allows the independent operation of the conventional power part with or without CO2 capture under optimal conditions without any compromises, which are else needed to facilitate CO2 capture. Further, the impact of CO2 capture on the overall plant capacity can be minimized. Depending on the operating permits and grid requirements, the electric power, which can be delivered to the power grid should not be changed if CO2 capture equipment comes into operation or CO2 capture equipment is added to an existing plant.

In a power plant with CO2 capture as known from literature, the power plant capacity is significantly reduced once CO2 capture equipment comes into operation. Even when CO2 capture equipment is not in operation, the efficiency of the steam cycle is typically compromised by providing the possibility to extract steam for a possible CO2 capture.

The conventional power part and the CO2 power part can be a fossil fired steam power plant or a gas turbine based power plant. A gas turbine based power plant is for example a combined cycle power plant, a simple cycle gas turbine power plant, or a gas turbine with co-generation or any combination of these plant types. If applicable the CO2 power part can be sized to provide steam needed for regeneration of a CO2 absorbent or a CO2 adsorbent. Its steam cycle can be optimized to provide steam for regeneration of a CO2 absorbent or CO2 adsorbent without compromising the conventional part. The CO2 power part can be sized to provide at least the entire auxiliary power needed to operate the CO2 capture equipment. Further it can be sized to also provide the power needed for CO2 compression.

By providing not only CO2 capture equipment but a CO2 power part with a CO2 capture system, both drawbacks: efficiency penalty on the conventional part and capacity reduction can be avoided.

One further main aspect of the invention is to provide a plant, in which the flue gases of the conventional part are mixed with the flue gases of the CO2 capture part before the CO2 is captured from the mixture of flue gas flows.

Mixing of the flue gas flows is advantageous because only one CO2 capture part is required. This facilitates operation of the overall plant and can reduce the initial investment as well as the operation cost of the plant. Further, depending on the CO2 concentration of the two flue gas flows, the CO2 capture rate and type of capture plant, the energy requirement to capture the CO2 from the mixed flue gas can be lower than the energy requirement to capture CO2 from two separate flue gas flows. This is especially true if the conventional power part has a first CO2 concentration in the flue gases, and the CO2 capture part has a second CO2 concentration in the flue gases, which is different from the first CO2 concentration. The mixture has a mass averaged flue gas concentration, which is above the lower CO2 concentration and can lead to a better capture performance of the overall system.

In one embodiment the conventional power part is a fossil fired steam power plant, i.e. a power plant comprising at least one fossil fired boiler with at least one steam turbine, and the CO2 power part comprises a combined cycle power plant.

Typically the CO2 concentration of the fossil-fired steam power plant is in the order of 9 to 12% (mole), and can reach even higher values. Depending on the gas turbine type and on the operating conditions the CO2 concentration in the flue gases of a gas turbine are in the order of 2 to 5 % (mole). At low load the CO2 concentration in the flue gases of a gas turbine can even be as low as 1 to 2 % (mole). These low CO2 concentrations do not allow an efficient CO2 removal from the flue gases.

By mixing flue gas from the fossil fired conventional power part with flue gases from the gas turbine, the overall CO2 concentration remains at a sufficiently high level to allow efficient CO2 removal at a high removal rate.

Recirculation of part of a gas turbines flue gases into the inlet air of the gas turbine to increase the CO2 concentration of the flue gases has been proposed in the past. However, this requires additional ducts, flue gas coolers and other equipment and therefore increases space requirements and complexity of the plant. Further, depending on the gas turbine type and fuel used, the recirculation ratio is typically limited to less than about 50% of the gas turbine's flue gases so that even with flue gas recirculation the CO2 concentration in the flue gases stays below the level of a fossil fired steam power plant.

Therefore a combination in which the conventional power part is a fossil fired steam power plant, and the CO2 power part comprises a combined cycle power plant with flue gas recirculation is proposed. In this embodiment the additional equipment, space and operational effort to increase the CO2 concentration of the gas turbine's flue gases by recirculation are made. In addition the gas turbine's flue gases are mixed with the flue gases of the fossil fired steam power plant, resulting in a high CO2 concentration for efficient CO2 removal.

In another embodiment for CO2 capture from a conventional combined cycle power plant, the CO2 power part is based on a fossil fired steam plant. Mixing of the fossil fired CO2 capture part's flue gases with the flue gases of the combined cycle power plant increases the CO2 concentration of the flue gases compared to those of the combined cycle power plant, leading to a better CO2 capture efficiency. This can be done for combined cycle power plants with and without flue gas recirculation.

Further, both the conventional power part and the CO2 power part can be combined cycle power plants. In this case mixing of both flue gas flows allows the use of only one CO2 capture plant, thus reducing the number of equipments needed and simplifying the overall plant layout.

In another embodiment a conventional combined cycle power plant can be combined with a CO2 capture part based on a combined cycle power plant with recirculation. This allows the use of existing gas turbine technology for the conventional part and to combine it with up to date technology on the CO2 capture part side. The CO2 concentration of the conventional part's flue gases is increased by mixing with the flue gases from the CO2 capture part, thus facilitating CO2 capture.

This combination is especially suitable for retrofit applications into existing combined cycle power plants. Due to operational constraints or site-specific limitations in the plant arrangement, recirculation of flue gases might not be feasible for an existing conventional combined cycle power plant. However, the additional CO2 capture parts combined cycle might be based on a new gas turbine designed for recirculation and the plant arrangement can be designed with the space required for CO2 capture and recirculation. Again, the mixed flue gases have a higher CO2 concentration than the flue gases of the conventional combined cycle power plant without recirculation.

In still another embodiment the conventional power part and the CO2 power part both comprise of a combined cycle power plant with recirculation. This inherently gives the advantage of only using one CO2 capture system for both plant parts. Further, it is possible to apply two different recirculation rates. Typically the recirculation rate of currently existing gas turbines is limited to a low fraction of the flue gases and the resulting CO2 concentration of the flue gases is still moderate. Typically it will remain below 6% without any design modifications to allow high recirculation rates.

The recirculation rate of gas turbines designed for flue gas recirculation, allow the recirculation of a higher fraction of the flue gases leading to a high CO2 concentration in the flue gases. This kind of gas turbine can typically be employed for the CO2 power part, especially in the case of retrofit applications. By mixing both flue gas flows the average CO2 concentration will allow an efficient CO2 capture from the total flue gas flow.

One embodiment of the invention is directed at power plant burning a carbon-based fuel, which is prepared for the addition or retrofit of a CO2 capture plant. This type of plant is also called capture ready. The main distinguishing feature of this capture ready plant is that the plant arrangement is not designed to simply provide space required for a future CO2 capture system but that it is designed for a complete CO2 capture plant, i.e. a future CO2 capture system plus a future CO2 power part to drive the CO2 capture system. Further, space for a flue gas system that mixes the flue gas flows of the conventional power part and the CO2 power part is provided.

In one embodiment, the stack of the capture ready conventional plant is already designed for the maximum flue gas flow of the final plant including conventional part and CO2 power part. Further, the stack is arranged at is final location considering the CO2 power part. The conventional power part and the future CO2 power part are arranged to discharge their flue gases next to each other to minimize the flue gas ducting. Further, the flue gas ducts may already include a flap, damper or diverter to direct the flue gases to the CO2 capture system, once it is retrofitted. This allows the normal operation of the conventional part during construction of the CO2 power part. The CO2 power part can be commissioned independently of the operation of the conventional power part and the CO2 capture system itself can be tested and commissioned up to part of its capacity using the flue gases of the CO2 power part. For change over to CO2 capture from the conventional power part the direction into which the flap, damper or diverter releases its flue gases simply has to be changed. Once the CO2 capture plant is in full operation the part of the original flue gas duct of the conventional power part, which is downstream of the damper or diverter becomes a bypass duct. To allow the future use as a bypass stack, the stack of the retrofit ready conventional power plant is designed with the flow capacity, which is required to bypass the mixed flue gases of the conventional power part, and the future CO2 power part around the future CO2 capture system.

To take the additional pressure losses of the CO2 capture system into account, space for a flue gas blower can be provided. This would allow optimizing the conventional power part for the initial back pressure of the ducting, which is directly leading the flue gases to the stack. In one embodiment the flue gas blower would be installed downstream of the diverter or damper and is only needed for CO2 capture operation.

Besides this single mechanical interface, control interfaces between the conventional power part, the CO2 power part and the CO2 capture system are required. Further, a common electrical system and grid connection is advantageous.

One major advantage of the proposed plant arrangement is possibility to retrofit or upgrade an existing fossil fired conventional power plant without CO2 capture to a power plant with CO2 capture without any significant modifications to the existing power plant. One element of the current invention is a method of retrofitting an existing fossil fired conventional power plant without CO2 capture to a power plant with CO2 capture. According to this method a CO2 power part, flue gas ducting and CO2 capture system are built next to the existing conventional power plant, wherein the flue gas ducting is designed to mix the flue gases of the existing conventional power part and the CO2 power part, wherein the CO2 capture system is designed to capture CO2 from the mixed flue gases, and wherein the CO2 power part is designed to provide at least the thermal and/ or electrical energy required to capture CO2 from the mixed flue gases.

According to an embodiment of this method the CO2 capture system, the flue gas ducting, and the CO2 power part are built while the conventional power plant is in normal operation and that operation of the existing fossil fired conventional power plant is only interrupted for connecting the existing fossil fired conventional power plant to the additional or changed flue gas ducting and subsequent recommissioning. Depending on the existing plant's stack, the change in total flue gas flow a new stack might be required. The stack or stack modification are considered to be part of the flue gas ducting.

Interruption of the commercial operation of the existing power plant can thus be minimized. The time needed for reconnecting or changing the flue gas ducts can be reduced below the time needed for a normal scheduled maintenance outage. The CO2 power part can be commissioned parallel to commercial operation of the existing plant. Further, the main commissioning effort of the CO2 capture system can be carried out while the system is using flue gasses from the CO2 power part.

A further subject of this invention is methods to operate a thermal power plant for the combustion of carbon-based fuels with a CO2 capture system as described above.

The power plant described above allows a flexible operation with CO2 capture and different operating methods depending on the optimization target. Possible optimization targets are for example maximum power, maximum efficiency, and maximum CO2 capture rate.

In particular the order in which the conventional power part, the CO2 power part and CO2 capture system are started, loaded and deloaded can be used as control parameter to optimize the plant operation.

For example if the conventional power part is a steam power plant its start up typically takes a relatively long time, i.e. several hours. During the start-up the flue gas composition and temperature are not optimized for CO2 capture. However, the total CO2 emitted during this period of time is small compared to the CO2 emitted during a typical operating period. It is therefore generally accepted that CO2 capture commences only after the conventional part is loaded to a high part load or base load. If the CO2 power part is a gas turbine based power plant, which can start-up and load considerably faster, it is started with a time delay matched to the difference in time between start- up and loading of the conventional power part and start- up and loading of the CO2 power part.

Further, the CO2 capture system will be started and loaded after the CO2 power part delivers sufficient power to operate it.

Depending on the CO2 capture system used, the start up of the CO2 capture system can take place in a matter of minutes, as conceivable for example for CO2 separation using swirl nozzles, which are driven by electric motors. However, for type of CO2 capture systems, as for example absorption or adsorption systems the start up can take longer periods of time in the order of one or several hours. The start-up time of the CO2 capture system has to be considered during start-up of the overall plant. If needed the CO2 power part has to be started earlier to take into account the CO2 capture systems start-up time. Depending on the different plant start-up times the CO2 power part might be started before the conventional power part in order to assure CO2 capture, once it is required.

To allow fast loading of the power plant according to the requirements of the electricity grid or dispatcher, a method is suggested in which a change in net power output of the plant is achieved by first loading the conventional and CO2 power part to meet the target net power output and than the CO2 capture system come into operation and the capture rate is increased to reach the target capture rate. While the CO2 capture system runs up and/ or is increasing the capture rate the net power output is kept constant and the gross power output of the plant is further increased to meet the increasing power consumption of the CO2 capture system.

To simplify the control interfaces between the conventional power part and the CO2 power part, two separate power control methods can be used:
The load of CO2 power part can be controlled as a function of the CO2 capture systems main operating parameters like for example the CO2 capture systems' power demand, the total mixed flue gas mass flow, the CO2 content of the mixed flue gas flow, or a combination of these parameters or another parameter representing the capture system's operating condition.
The load control of the conventional power part is used to control the net power output of the power plant. Typically the conventional power part and CO2 power part have one common connection to the grid. The total power delivered to the grid via this grid connection is the net power and shall meet grid's power demand. According to this embodiment the conventional power part is controlled to deliver the difference in power between the grid's power demand and any excess net power output of the CO2 power part, which it delivers besides driving the CO2 capture system.

Fossil fired steam power plants as described here are typically coal fired steam power plants. However, the invention is also applicable to any other kind of fossil fired steam power plants such as oil or gas fired steam power plants.

### BRIEF DESCRIPTION OF THE DRAWINGS

The invention, its nature as well as its advantages, shall be described in more detail below with the aid of the accompanying drawings. Referring to the drawings.
Fig. 1 schematically shows a power plant consisting of a fossil-fired conventional steam power part with a fossil-fired steam power plant as CO2 power part, and a CO2 capture system,
Fig. 2 schematically shows a power plant consisting of a fossil fired conventional steam power part with a gas turbine combined cycle plant as CO2 power part, and a CO2 capture system,
Fig. 3 schematically shows a fossil fired conventional steam power part with a gas turbine combined cycle plant with flue gas recirculation as CO2 power part, and a CO2 capture system,
Fig. 4 schematically shows a power plant consisting of a combined cycle power plant as conventional power part with a gas turbine combined cycle plant with flue gas recirculation as CO2 power part, and a CO2 capture system,
Fig. 5 schematically shows a power plant consisting of a conventional power part with a CO2 power part in which both plant parts are combined cycle power plants with flue gas recirculation, and a CO2 capture system,
Fig. 6 schematically shows a power plant consisting of a fossil fired conventional steam power part with a gas turbine combined cycle plant with flue gas recirculation as CO2 power part in which the low-pressure steam turbine can be decoupled by a clutch during CO2 capture operation, and a CO2 capture system,
Fig. 7 schematically shows the achievable CO2 capture rate as a function of the available specific energy to capture CO2 for different CO2 concentrations of the flue gas.

### DETAILED DESCRIPTION OF THE DRAWINGS AND THE INVENTION

The main components of the power plant with CO2 capture according to this invention are a conventional power part 1, a CO2 power part 2, and a CO2 capture system 12.

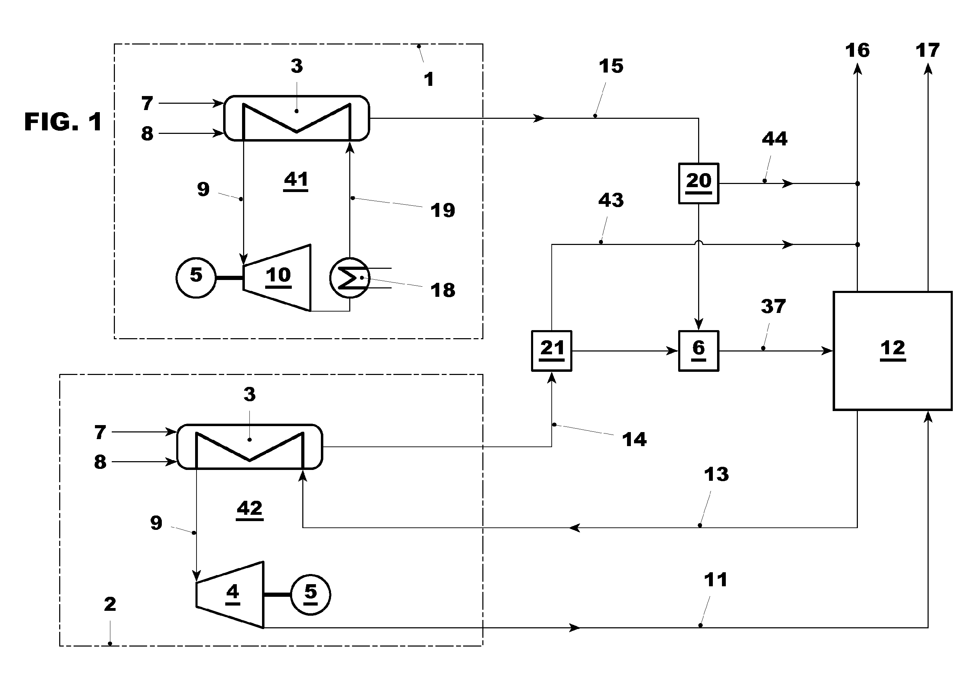

A first example of a plant arrangement according to one embodiment of the invention is shown in Fig. 1. In this example the conventional power part 1 is a fossil fired steam power plant 41. It comprises a boiler 3 to which fossil fuel 8 and air 7 are supplied. The fuel 7 and air 8 are combusted generating live steam 9 and conventional power part flue gases 15. Further, it comprises a steam turbine 10, which is driven by the live steam 9, a generator 5, which produces electric power, and a condenser 18 from which feed water 19 is returned to the boiler. The steam cycle is simplified and shown schematically without different steam pressure levels, feed water pumps, etc., as these are not subject of the invention.

In the example shown here, the CO2 power part 2 is a fossil fired back pressure steam power plant 42. It comprises a boiler 3 to which fuel 8 and air 7 are supplied. The fuel 7 and air 8 are combusted generating live steam 9 and CO2 power part flue gases 14. Further, it comprises a back pressure steam turbine 4, which is driven by the live steam 9, and a generator 5, which produces electric power. The low-pressure steam 11 leaving the back pressure steam turbine 4 is supplied via a steam line to the CO2 capture system 12. Condensate 13 is returned to the boiler 3 from the CO2 capture system 12. This steam cycle is also simplified and shown schematically without different steam pressure levels, feed water pumps, etc., as these are not subject of the invention.

The CO2 capture system 12 is schematically shown as a box which removes CO2 from a mixed flue gas 37, which consists of conventional power part flue gases 15 and CO2 power part flue gases 14. The CO2 depleted flue gas 16 is released from the CO2 capture unit to a stack 16. In case the CO2 capture unit 12 is not operating, it can be bypassed via the flue gas bypasses. To control the bypasses a bypass flap for the flue gases of the conventional power part 20 and a bypass flap for the CO2 power part 21 are provided in the flue gas ducting.

A CO2 capture system 12 consists for example of a CO2 absorption unit, in which CO2 is removed from the mixed flue gas 37 by an absorbent, and a regeneration unit, in which the CO2 is released from the absorbent. Depending on the temperature of the flue gas and the operating temperature range of the CO2 absorption unit a flue gas cooler 6 might also be required. The captured CO2 is sent for compression and storage 17.

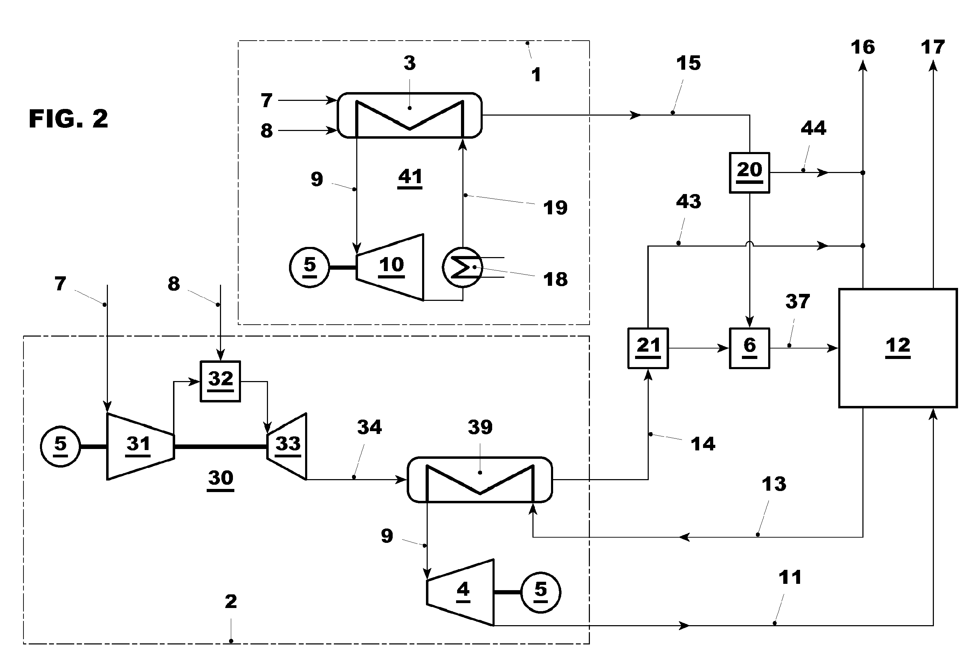

Fig. 2 schematically shows a power plant consisting a fossil fired conventional steam power plant 41, a combined cycle power plant 30, and a CO2 capture system 12. The steam power plant 41, and the CO2 capture system 12, are analogue to those shown in Fig. 1.

The combined cycle power plant 30 comprises a gas turbine, and a heat recovery steam generator 39 with a water steam cycle. The gas turbine comprises a compressor 31, in which inlet air 7 is compressed, a combustor 32, and a turbine 33 and drives a generator 5. The compressed gas is used for combustion of the fuel 8 in the combustor 32, and the pressurized hot gases expand in the turbine 33. Its main outputs are electric power from the generator 5, and hot flue gases 34. The hot flue gases 34 pass the heat recovery steam generator 39 (HRSG), which generates live steam 9. The flue gases leave the HRSG 39 at a lower temperature level and are directed to the CO2 capture system 12 as flue gases of the CO2 power part 14. Further, the combined cycle power plant 30 comprises a back pressure steam turbine 4, which is driven by the live steam 9, and a generator 5, which produces electric power. The low-pressure steam 11 is supplied via a steam line to the CO2 capture system 12. Condensate 13 or lowgrade steam is returned to the boiler 3 from the CO2 capture system 12. This steam cycle is also simplified and shown schematically without different steam pressure levels, feed water pumps, etc., as these are not subject of the invention.

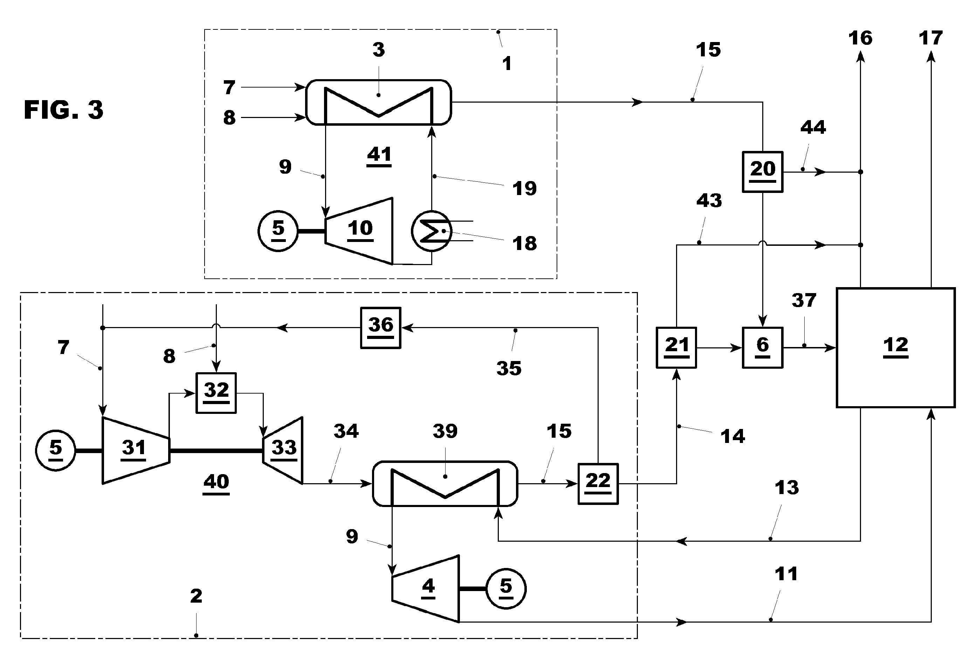

Fig. 3 schematically shows another example of a power plant consisting of a fossil fired conventional steam power plant 41, a combined cycle power plant 40, and a CO2 capture system 12. The main parts are analogue to those shown in Fig. 2. However, the gas turbine shown here is a gas turbine with flue gas recirculation. A controllable fraction of the flue gases is diverted in the control flap for flue gas recirculation 22 and recirculated to the inlet air 7 via the flue gas recirculation line 35. The recirculated flue gas is cooled in the flue gas cooler 36 to limit or control the inlet temperature of the gas turbine compressor 31. The flue gas cooler 36 typically comprises a condensate separator (not shown), which removes condensate from the cooled flue gases.

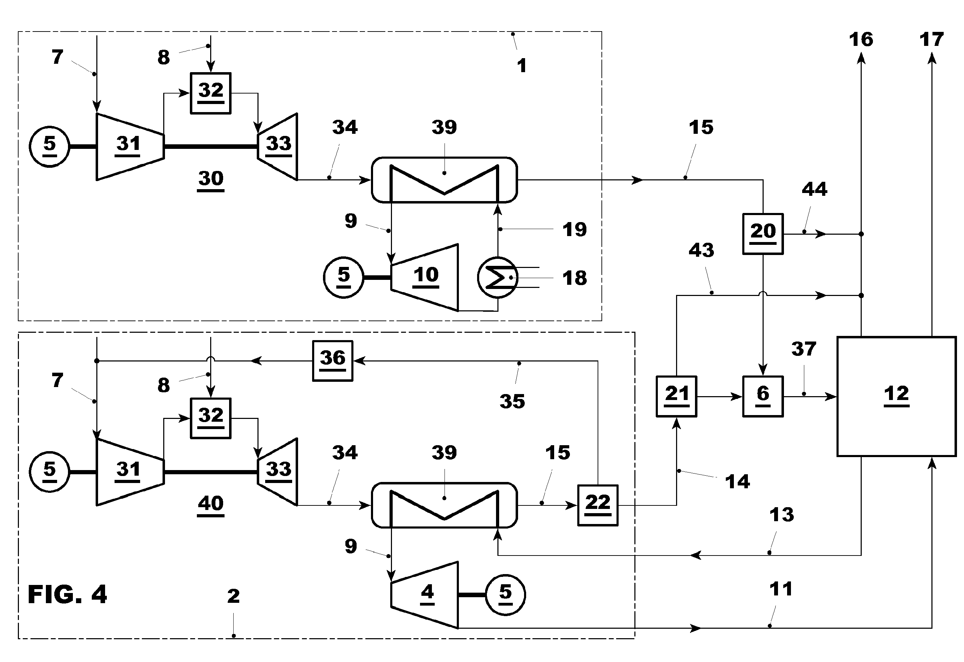

Fig. 4 schematically shows a power plant, which consists of a combined cycle power plant 30 as conventional power part 1, a gas turbine combined cycle plant with flue gas recirculation 40 as CO2 power part 2, and a CO2 capture system 12. The arrangement is based on the one shown in Fig. 3. Instead of a steam power plant 41 a combined cycle power plant 30 is used as conventional power part 1.

The combined cycle power plant 30 comprises a gas turbine, a heat recovery steam generator 39 with a water steam cycle. The gas turbine comprises a compressor 31, in which inlet air 7 is compressed, a combustor 32, and a turbine 33, and drives a generator 5. The compressed gas is used for combustion of the fuel 8 in the combustor 32, and the pressurized hot gases expand in the turbine 33. Its main outputs are electric power from the generator 5, and hot flue gases 34. The hot flue gases 34 pass the heat recovery steam generator 39, which generates live steam 9. The flue gases leave the HRSG 39 at a lower temperature level and are directed to the CO2 capture system 12 as flue gases of the conventional power part 15. Further, it comprises a steam turbine 10, which is driven by the live steam 9, a generator 5, which produces electric power, and a condenser 18 from which feed water 19 is returned to the HRSG 39.

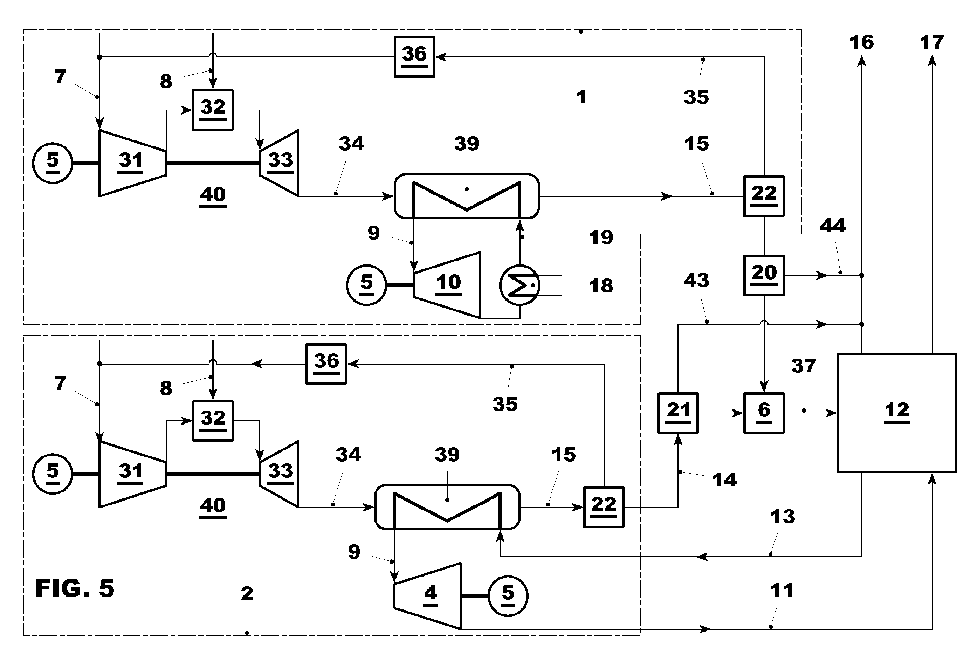

Fig. 5 schematically shows another example of a power plant consisting two combined cycle power plant with flue gas recirculation 40 and a CO2 capture system 12. The main parts are analogue to those shown in Fig. 4. However, the gas turbine of the conventional power part 1 is also a gas turbine with flue gas recirculation. A controllable fraction of the flue gases is diverted in the control flap for flue gas recirculation 22 and recirculated to the inlet air 7 via the flue gas recirculation line 35. The recirculated flue gas is cooled in the flue gas cooler 36 to limit or control the inlet temperature of the gas turbine compressor 31. The flue gas cooler 36 typically comprises a condensate separator (not shown), which removes condensate from the cooled flue gases.

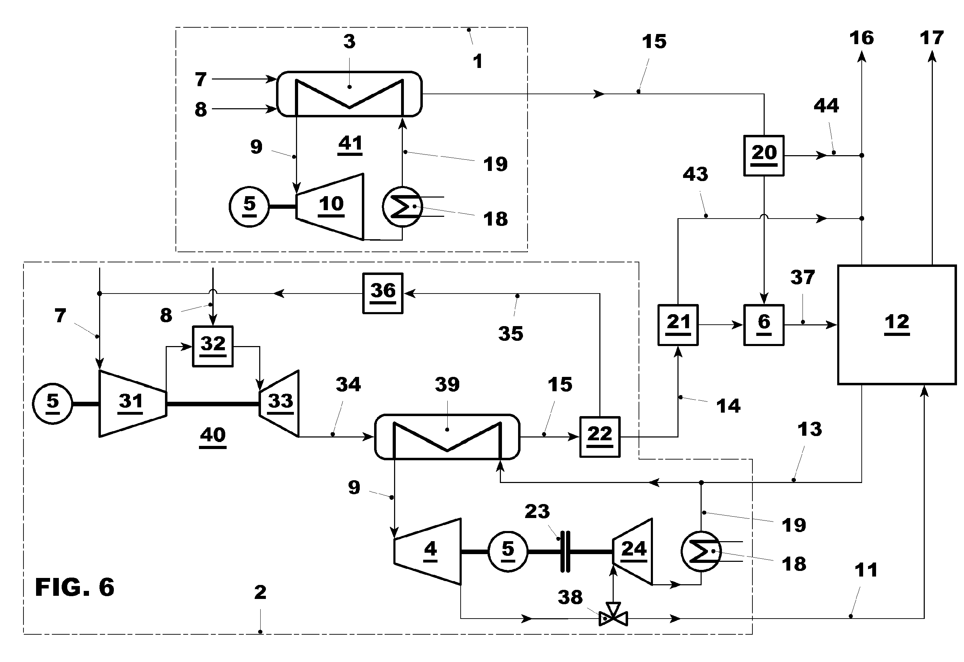

Fig. 6 is based on Fig. 3 and schematically shows a power plant consisting of a fossil fired conventional steam power plant 41, a combined cycle power plant 40 with flue gas recirculation, and a CO2 capture system 12. The steam power plant 41, and the CO2 capture system 12, are analogue to those shown in Fig. 3.

To increase the operational flexibility of the CO2 power part 2, the water steam cycle has been modified compared to the embodiment shown in Fig. 3. In this embodiment the an additional steam control valve 38, a low-pressure steam turbine 24, a condenser 18, and a feed water line 19 are added to the water steam cycle. This arrangement allows the use of low-pressure steam 11 to produce additional electric power in case that none or not all low-pressure steam 11 is required to operate the CO2 capture system 12. The split between low-pressure steam 11, which is directed to the CO2 capture system 12 and the low-pressure steam turbine 24 is controlled by the steam control valve 38. The steam control valve 38 is schematically shown as a three-way valve. Alternatively other control means, such as for example two control valves could also be used.

The steam turbine 24 can be mechanically connected to the generator 5 by a clutch 23. For example an automatic overrunning clutch can be used to couple the low-pressure team turbine 24 to the existing shafting of the generator 5 and back pressure steam turbine 4. This arrangement allows shutting down the low-pressure steam turbine 24 if the low-pressure steam is used for the CO2 capture system 12. Once excess low-pressure steam is available, the excess steam is directed via the steam control valve 23 to the low-pressure steam turbine 24. It runs up, the clutch 23 automatically engages and the low-pressure steam turbine 24 can load up to drive the generator 5, and thus increase the electric power production of the plant.

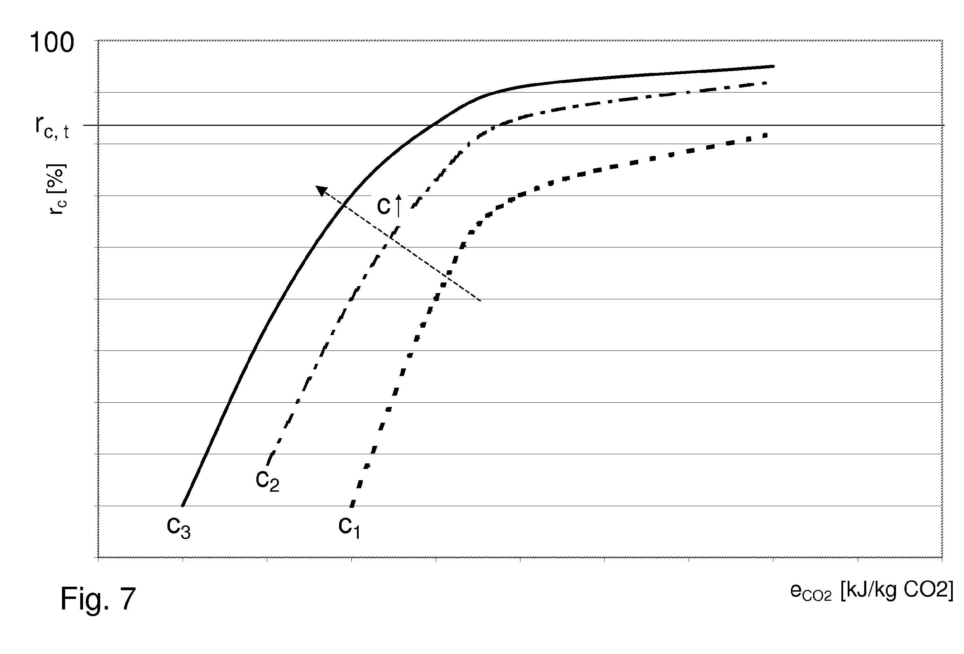

Fig. 7 schematically shows the achievable CO2 capture rate r_{c} as a function of the available specific energy e_{CO2} to capture CO2 for different CO2 concentrations c₁, c₂ and c₃ of the flue gas. The Figure visualizes the reason why it can be advantageous to mix two flue gas flows before CO2 capture.

With increasing CO2 concentration c↑ the capture rate r_{c}, which can be achieved with a given specific energy e_{CO2} to capture CO2 from a flue gas, is increasing. Further, the achievable capture rate r_{c}, is proportional to the specific energy e_{CO2}, which is available to capture CO2 from a flue gas. The achievable capture rate r_{c}, shows a characteristic trend as function of the available specific energy e_{CO2} to capture CO2 for all concentrations c₁, c₂ and c₃. Initially all curves show a step gradient, which becomes smaller and asymptotically approaches 100% capture rate r_{c}. However, the capture rate r_{c} at which the gradient changes depends on the CO2 concentration in the flue gases.

For a low CO2 concentration c₁ a significant change in gradient occurs already at a relatively low capture rate r_{c}. For a higher CO2 concentration c₂ or c₃ the favorable step gradient persist up to a high capture rate r_{c} in the order of 90% or more. Due to the different capture rate, at which the change in gradient occurs, the specific energy e_{CO2} to reach a high capture rate order of 90% increases about exponentially with lower CO2 concentrations in the flue gas as for example for the concentration c₁. In consequence, the required energy to reach a specific target capture rate r_{c, t} of for example 83% is lower, if a first flue gas flow with a low CO2 concentration c₁ and a second flue gas flow with a high CO2 concentration c₃ are mixed to obtain a mixed flue gas 37 with a average CO2 concentration c₂ than if the CO2 is captured from the two separate flue gas flows.

Exemplary embodiments described above and in the drawings disclose to a person skilled in the art embodiments, which differ from the exemplary embodiments and which are contained in the scope of the invention.

For example, the low-pressure steam turbine 24 can be arranged on a separate shafting to drive a separate generator for electric power production; or the steam turbine and gas turbine of any of the combined cycle power plants can be in single shaft arrangement.

As another example the CO2 power part flue gases 14 and the conventional power part flue gases 15 can be mixed upstream of a bypass flap 20, 21 so that only one bypass flap for the total flue gas is required. Further, arrangement of two flue gas coolers 6, one for the conventional power part flue gases 15, and one for the CO2 power part flue gases 14, can be advantageous. This would for example be the case if the temperatures of the conventional power part flue gases 15 and the CO2 power part flue gases 14 differ.

In the examples given above, single combustion gas turbines are described. It is to be understood that sequential combustion gas turbines, also called gas turbine with reheat combustor, as described for example in US5577378, can equally be used. A combination of sequential combustion gas turbine and singe combustion gas turbine based power plants can also be used. The application of sequential combustion gas turbines can be advantageous, as the CO2 concentration in their flue gases is typically higher that in single combustion gas turbines. Further, any of the above examples can be realized with gas turbines with or without flue gas recirculation.

### List of reference symbols

- 1: Conventional power part
- 2: CO2 power part
- 3: Boiler
- 4: Back pressure steam turbine
- 5: Generator
- 6: Flue gas cooler
- 7: Air
- 8: Fuel
- 9: Live steam
- 10: Steam turbine
- 11: Low-pressure steam
- 12: CO2 capture system
- 13: Condensate or low grade return steam
- 14: CO2 power part flue gases
- 15: Conventional power part flue gases
- 16: CO2 depleted flue gas
- 17: CO2 for compression and storage
- 18: Condenser
- 19: Feed water
- 20: Bypass flap for flue gases of the conventional power part
- 21: Bypass flap for flue gases of the CO2 power part
- 22: Control flap for flue gas recirculation
- 23: Clutch
- 24: Low-pressure steam turbine

- 30: Combined cycle power plant
- 31: Compressor
- 32: Combustor
- 33: Turbine
- 34: Gas turbine flue gas
- 35: Flue gas recirculation line
- 36: Flue gas cooler
- 37: Mixed flue gases
- 38: Steam control valve
- 39: HRSG
- 40: Combined cycle power plant with flue gas recirculation gas turbine
- 41: Steam power plant
- 42: Back pressure steam power plant
- 43: Bypass duct from conventional part
- 44: Bypass duct from CO2 power part

- c↑: increase in concentration
- c₁, c₂, c₃: CO2 concentration in flue gas
- r_{c}: capture rate
- r_{c, t}: target capture rate
- e_{CO2}: specific energy required to capture CO2

## Claims

1. A power plant comprising a conventional power part (1), a CO2 power part (2), an flue gas system that mixes the flue gas flows of the conventional power part (1) and the CO2 power part (2), and a CO2 capture system (12) for removing CO2 from the mixed flue gas (37), wherein the conventional power part (1) is a fossil fired steam power plant or a gas turbine based power plant, and wherein the CO2 power part (2) is a fossil fired steam power plant or a gas turbine based power plant, which is designed to provide at least the thermal and/or electrical power required to capture CO2 from the mixed flue gas (37) mass flow.

2. A power plant according to claim 1, **characterized in that** the flue gas of the conventional power part (1) has a first CO2 concentration, and **in that** the flue gas of the CO2 power part (2) has a second CO2 concentration, which is different from the first CO2 concentration.

3. A power plant according to claim 1 or 2, **characterized in that** the conventional power part (1) is a fossil fired steam power plant and the CO2 power part (2) is a gas turbine power plant or **in that** the conventional power part (1) is gas turbine based power plant and the CO2 power part (2) is a fossil fired steam power plant.

4. A power plant according to one of the preceding claims, **characterized in that** it comprises a gas turbine based power plant with flue gas recirculation.

5. A power plant according to claim 1 or 2, **characterized in that** the conventional power part (1) and the CO2 power part (2) are gas turbine based power plants, **in that** the gas turbine of the CO2 power part (2) has flue gas recirculation, and **in that** the conventional power part (1) has no flue gas recirculation or a design recirculation rate which is lower than the design recirculation rate of the CO2 power part (2).

6. A power plant according to one of the preceding claims, **characterized in that** the CO2 power part (2) is a combined cycle power plant, said combined cycle power plant having at least one back pressure steam turbine (4) for providing low or medium pressure steam to the CO2 capture system (12).

7. A power plant according to claim 6, **characterized in that** the back pressure steam turbine (4) is sized to deliver the design steam flow of the CO2 capture system (12).

8. A capture ready power plant comprising a conventional power part (1), space required to add a CO2 capture plant, comprising a CO2 power part (2), an flue gas system that mixes the flue gas flows of the conventional power part (1) and the CO2 power part (2), and a CO2 capture system (12) designed to remove CO2 from the mixed flue gas (37) mass flow,
wherein the conventional power part (1) is a fossil fired steam power plant or a gas turbine based power plant, and wherein the CO2 power part (2) is a fossil fired steam power plant or a gas turbine based power plant, which is designed to provide at least the thermal and/or electrical power required to capture CO2 from the mixed flue gas (37) mass flow.

9. A capture ready power plant according to claim 8, **characterized in that** the lay out is designed such that the flue gas of the conventional power part (1) and the future CO2 capture power part (2) are arranged to discharge their flue gas next to each other, followed by space needed for mixing of the flue gases and space needed for the CO2 capture system (12) in order to minimize the required flue gas ducting.

10. A capture ready power plant according to Claim 8 or 9, **characterized in that** the lay out is designed to provide space for electrical power and steam supply lines from the CO2 power part (2) to the CO2 capture system (12).

11. A capture ready power plant according to one of the claims 8 to 10,
**characterized in that** the flue gas ducting includes a mixing section for future connection of the CO2 power part (2), a flue gas flap or damper with one closed branch prepared for connection to a future CO2 capture system (12) and one branch leading to a stack, wherein the stack is designed with the flow capacity required to bypass the mixed flue gases (37) of the conventional power part (1), and the future CO2 power part (2) around the future CO2 capture system (12).

12. A method for retrofitting an existing fossil fired conventional power plant without CO2 capture to a power plant with CO2 capture, **characterized in that** a CO2 power part, flue gas ducting, and a CO2 capture system (12) are built next to the existing conventional power part, wherein the CO2 capture system (12) is designed to capture CO2 from the mixed flue gases (37) of the conventional power part and the CO2 power part, and wherein the CO2 power part is designed to provide at least the electrical and/ or thermal energy required to capture CO2 from the mixed flue gas (37) mass flow.

13. A method according to claim 12, **characterized in that** the CO2 capture system (12), the flue gas ducting, and the CO2 power part (2) are built while the conventional power part is in operation, and that operation of the existing fossil fired conventional power part is only interrupted for connecting the existing fossil fired conventional power part to the additional or changed flue gas ducting, and for subsequent recommissioning.

14. A method for operating a power plant according to one of the claims 1 to 7,
**characterized in that** the order in which the conventional power part (1), the CO2 power part (2), and CO2 capture system (12) are started, loaded, and deloaded is used as control parameter to optimize the overall plant operation.

15. A method according to claim 14, **characterized in that** in order to minimize the CO2 emissions during start up and loading, the CO2 power part (1) is started first, the CO2 capture system (12) is started second, and thirdly the conventional power part (1) is started.

16. A method according to claim 14, **characterized in that** during start up and loading the net power output of the plant is achieved by first loading the conventional power part (1), and CO2 power part (2), and **in that** the CO2 capture system (12) is started and/ or increases its CO2 capture rate to reach the target capture rate after the target net power output is achieved, and **in that** the gross power output of the plant is further increased while the CO2 capture system (12) runs up and/ or is increasing the capture rate.

17. A method according to one of the claims 14 to 16, **characterized in that** for steady state operation the CO2 power part (2) load is controlled as a function of the total mixed flue gas (37) mass flow, as a function of the CO2 content of the mixed flue gas (37) flow, as a function of the power demand of the CO2 capture system (12) or a combination of these parameters, and **in that** the load setting of the conventional power part (1) is used to control the net power output of the power plant.
